(19) **Europäisches Patentamt European Patent Office Office européen des brevets**

(11) **EP 3 816 251 A1**

(12) **EUROPEAN PATENT APPLICATION**

(43) Date of publication:
05.05.2021 Bulletin 2021/18

(51) Int Cl.:
$C09J\ 103/02$ (2006.01)  $C08K\ 3/22$ (2006.01)
$C08K\ 5/00$ (2006.01)

(21) Application number: 20305236.0

(22) Date of filing: 05.03.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 29.10.2019 EP 19306410

(71) Applicant: EVERTREE
60280 Venette (FR)

(72) Inventor: The designation of the inventor has not yet been filed

(74) Representative: Santarelli
49, avenue des Champs-Elysées
75008 Paris (FR)

(54) **COMPOSITION COMPRISING GROUND PLANT SEED, PROTEIN ISOLATE, STARCH OR A MIXTURE THEREOF, METAL OXIDE AND PLASTICIZER**

(57) The invention relates to a composition, such as an adhesive and/or injectable composition, comprising at least or consisting of:
• ground plant seeds, protein isolate, starch or mixture thereof,
• a metal oxide,
• a plasticizer, and
• optionally, water.
The invention also concerns an article and a ligno-cellulosic-based composite comprising said composition.

Fig. 6

EP 3 816 251 A1

**Description**

The present invention relates to compositions based on ground plant seeds, protein isolate, starch or a mixture thereof, at least one metal oxide and at least one plasticizer, process for obtaining same and uses thereof.

The invention also concerns lignocellulosic-based composite using said compositions.

Oleaginous (oil) and proteaginous (protein) plants are plants generally cultivated and exploited for their seeds or their fruits, which are particularly rich in fats and proteins.

Among the oleaginous plants, sunflower, rapeseed (or canola), peanut, sesame, cotton, flax, castor bean, olive, oil palm, hazelnut, walnut, almond or also coconut may be mentioned. However, even though classed as "oleaginous", these plants also contain a significant content of proteins.

Soya, which is a proteaginous plant, is sometimes classified as oleoproteaginous as it also produces oil. For this reason, it is often classed separately among the oleoproteaginous plants, as it is rich in both fats and proteins.

Among the proteaginous plants, pea (chickpeas, split peas), field bean and lupine, but also lentils, fenugreek and beans may be mentioned.

The oleaginous plants are mainly cultivated for their oil, used in different industries, such as human and animal food, lubricants, cosmetics, agronomy, in particular in the phytosanitary field, oil exploitation, materials or also the energy industry, for the production of biofuels such as biodiesel.

The conversion of the seeds or fruits of oleaginous plants to oil is generally carried out according to three main operations, which are:

- preparing the raw material to be extracted (seeds or fruits of an oleaginous plant): during its preparation, the raw material can be subjected to one or more of the following steps: cleaning or dedusting, sieving, shelling or dehulling.
- crushing: this operation can comprise several steps depending on the raw material to be crushed. In all cases, this operation comprises a step of pressing and extracting the oil contained in the raw material.
- refining the oil, which consists of removing all or part of the compounds contained in an oil which makes it unsuitable for use or subsequent conversion. For example, the refining of an oil intended for human consumption will generally comprise steps of neutralizing the taste, bleaching, deodorization, etc.

The crushing operation is a crucial operation for the conversion as it aims to extract the oil contained in the seeds or the fruits of the oleaginous plants.

This crushing operation therefore depends on the raw material from which it is sought to extract the oil. By way of example, in the case of seeds of oleaginous plants, the extraction carried out during the crushing is mainly based on two traditional techniques: the seeds called "*high*" in oil (≥35% by weight, for example sunflower or rapeseed) are crushed by pressure followed by chemical extraction while the seeds considered as "*low*" in oil (<35% by weight, in the case of soya for example) are generally subjected to a chemical extraction.

By chemical extraction, it is meant more particularly extraction with a solvent, such as an extraction with water or an organic solvent. When the extraction is carried out with an organic solvent, this step can be followed by a desolventizing step (step aimed at removing the solvents from a substrate, such as oil and/or a plant meal).

For example, in the case of rapeseed or sunflower, the crushing operation comprises the following steps:

- rolling: this is a step of grinding the seeds. In general, these pass between two smooth cylinders and leave in a ground state, in the form of "flakes",
- cooking: the objective of this step is to facilitate extraction of the oil contained in the seeds. In general, the flakes originating from the rolling are heated to approximately 80°C,
- extracting the oil contained in the seeds: this step is generally carried out by pressing (or pressure) in presses (pressing step).

All these steps can be carried out using a single machine exerting a continuous pressure while hot, i.e. the seeds are pre-heated to approximately 90°C, ground/rolled and then pressed in a screw-press where the temperature will reach up to approximately 120°C.

Two products are recovered at the end of this pressing step:

- on the one hand oil, generally described as "raw" or "pressed", and
- on the other hand, a first solid residue, namely press flakes (or press cakes) or a fat-containing meal.

The fat-containing meal generally comprises between 8 wt% and 20 wt% residual oil.

In order to extract this residual oil present in the fat-containing meal, the crushing can comprise at the end of the pressing, a step of chemical extraction with a solvent. The solvent usually used for this extraction is hexane. The step of extraction with a solvent thus produces on the one hand, the "*residual*" oil originating from the fat containing meal, and on the other hand, a second residue from the seeds, called defatted meal. The defatted meal generally comprises between 0.1 and 10 wt%, preferentially from 1 to 4 wt% unextracted oil.

On the other hand, in the case of soya, the crushing operation essentially comprises the following steps:

- rolling, and
- extracting the oil contained in the seeds: this step is generally carried out by chemical extraction with a solvent.

At the end of the soya crushing operation, two products are recovered: the oil and the soya seed meal.

The meal is therefore a co-product of vegetable oil production. However, the valorization of the plant meals by the oleaginous and/or oleoproteaginous industry has considerably developed over the last decades. In fact, as plant meal is very high in good quality proteins, it has rapidly been used as a source of vegetable proteins in animal feed, as a substitute for or a complement to proteins of animal origin. But the use of the plant meals is not limited to these specific valorization industries and has more recently been developed in other fields, in particular in the field of chemistry.

In the present text, "meal(s)" refers to "press flake(s)", "press cake(s)", "fat-containing meal(s)", or "defatted meal(s)".

By "ground plant seeds", it is meant ground whole plant seeds, i.e. whole plant seeds that are ground, ground whole plant fruits, plant seed meal in particulate form, ground plant seed meal or resulting plant seed (or fruit) flour.

Therefore, a difference between ground whole plant seeds and (ground) plant seed meal is that the seeds of the ground whole plant seeds were not subjected to an oil extraction step.

Adhesive compositions are used extensively in the wood products industry to make composites and related composite wood products. Adhesive compositions are also used to make engineered lumber composites.

Recent environmental concerns highlight the need for eco-friendly adhesive compositions.

Obviously adhesive compositions frequently used in the wood products industry are not part of this movement since they generally contain chemicals such as for example urea formaldehyde, phenol formaldehyde or polymeric methylene diphenyl diisocyanate, all sort of chemicals that are harmful to the environment and can cause health problems for individuals.

In addition, some of the compounds used in the manufacture of these adhesive compositions originate from petroleum raw materials, which again is no longer part of the ever-growing search for natural products with minimal environmental impact.

Furthermore, bio based products (protein, starch) are known as an alternative to petroleum-based polymers. However, the replacement of petroleum-based polymers by bio-based product is limited for an injection application. Indeed, one limitation of their current usage is linked to a poor injectability due to their higher viscosity even at elevated temperature (injection temperature). Another limitation is also linked to final mechanical performances which produce too brittle material which are not suitable for most of material end-use (plastic). Last limitation of bio-based material is linked to their poor water resistance versus petroleum material which are mainly hydrophobic. Therefore, there is a need for a bio-based composition that is suitable to be injected. Advantageously, this composition can be used as a matrix for the provision of lignocellulosic composites, such as wood composites.

The object of the present invention is thus to provide compositions, such as injectable and/or adhesive compositions, which contain only a minimum of, and if possible no, raw material of petroleum origin and which involve as little as possible, if not all, toxic chemicals, while retaining the conditions necessary for their use in the manufacture of the products for which they are intended (e.g. viscosity, curing, etc). In addition, these compositions must meet the performance requirements of the wood products in which they are included (such as modulus of rupture (MOR, also known as flexural strength, or bend strength, or transverse rupture strength), water resistance and thickness swelling (TS)).

In the same way, there is still a need for composite wood boards based on environmentally friendly materials such as ground plant seeds, and having improved properties.

By "adhesive composition", is meant a composition that is capable of binding materials together, in particular, lignocellulosic materials, under heating and/or pressing.

By "injectable composition", is meant a composition that is capable of being hot extruded. As an example, by "hot extruded", it is meant that the injectable composition passes through an extruder, in which the temperature inside the extruder screw preferably ranges from 50°C to 165°C and the nozzle temperature of the extruder is preferably comprised between 120°C and 170°C.

Surprisingly the applicant has found that the combination of ground plant seeds and/or ground plant seed derived compounds (i.e. proteins and/or starch), metal oxide and plasticizer provides a matrix for making lignocellulosic composite material having good mechanical and water resistance properties.

The Applicant has also found that polyols as plasticizers, especially when used in large amounts in an adhesive composition, do not adversely affect the water-resistant properties of the final product in which said adhesive composition is used, contrary to what is generally accepted in the field. Such surprising effect was also observed when developing an injectable composition.

Thus, the subject of the invention is primarily a composition, such as an injectable and/or adhesive composition, comprising at least or consisting of:

- ground plant seeds, protein isolate, starch or a mixture thereof,
- a metal oxide,
- a plasticizer, and
- optionally, water.

In one embodiment, said composition strictly does not comprise cross-linking agents from petroleum origin, such as for example glycidyl ether-based polymer, poly(glycidyl ether), aldehyde-based agent (urea-formaldehyde, phenolformaldehyde, melamine formaldehyde, etc.), polyamidoamine epichlorohydrin, isocyanate agent, and so on.

In a particular embodiment, said injectable and/or adhesive composition strictly does not comprise chemical compounds originating from petroleum raw materials (or fossil fuel based materials).

As mentioned above, said injectable and/or adhesive composition may optionally comprise water ("additional water").

By "additional water", it means that the injectable and/or adhesive composition according to the invention may or may not include water other than that contained in the other ingredients that are ground plant seeds, protein isolates and/or starch, metal oxides and plasticizers.

Advantageously, the quantity of additional water in the composition is comprised between 1% and 90% by weight, preferably between 10% and 80% by weight, preferably between 20% and 60% by weight with respect to the total weight of the injectable and/or adhesive composition.

By "strictly does not comprise", it is meant in the present text that the injectable and/or adhesive composition of the invention comprises no chemical compound and/or no cross-linking agent originating from petroleum raw materials.

In the present text, without indication to the contrary, any quantity is expressed in weight relative to the weight of the ground plant seeds, protein isolate, starch or mixture thereof. This means that to achieve the invention the skilled person will establish himself the amount of ground plant seeds, protein isolate, starch or mixture thereof and can then calculate the amount of other materials used according to the given indications based on the weight of ground plant seeds, protein isolate, starch or mixture thereof.

It will be also noted that throughout the application, unless otherwise specified, the ranges of values indicated are understood to be endpoints inclusive.

According to the invention, the plant seeds may be whole seeds or seed meals such as, for example, oil seed meal.

In a particular embodiment of the invention, ground plant seeds may contain at least 3% by weight of proteins with respect to the total weight of ground plant seeds. Preferably, the ground plant seeds contain at least 10% proteins, more preferably at least 18%, still more preferably at least 20%. More particularly, the ground plant seeds comprise between 3% and 80%, preferably between 3% and 60%, more preferably between 5% and 60%, even more preferably between 10% and 60%, still more preferably between 18% and 60%, most preferably between 20% and 60% by weight of proteins with respect to the total weight of ground plant seeds. More particularly, the ground plant seeds comprise between 3% and 50%, preferably between 5% and 50%, more preferably between 10% and 50%, even more preferably between 18% and 50% most preferably between 20% and 50% by weight of proteins with respect to the total weight of ground plant seeds.

Preferably, the ground plant seeds containing at least 3% by weight of proteins are:

- a ground plant seed meal of one or more species of oleaginous plants (denoted "ground plant seed meal" hereafter),
- ground fruits and/or seeds of one or more species of proteaginous plant(s) (denoted "ground proteaginous seeds" hereafter), or
- a mixture thereof.

Even more preferably, the ground plant seeds are ground whole plant seeds.

The plant seeds may be provided in the form of a seed meal, and preferably in the form of seed meal pellets. The plant seeds are advantageously oil and/or protein seeds, and preferably oil and protein seed meals.

The cellulose content of the ground plant seeds can be between 5 and 20% by weight of the total weight of ground plant seeds.

According to the invention, said seeds of the ground plant seeds can be from a plant belonging to one or several of palm, safflower, sunflower, rape (or canola), mustard, camelina, hemp, soybean, lupine, pea, flax, cotton.

The seeds of the ground plant seeds can be whole seeds such as whole pea seeds or a seed meal such as sunflower seed meal, rapeseed (or canola seed) meal or soy meal.

Preferably, the ground plant seeds may be ground whole pea seeds, sunflower seed meal, rapeseed (or canola seed) meal and/or soy meal, more preferably ground whole pea seeds.

For example, the plant seeds can be one or several of:

- palm seeds such as for example *Chrysalidocarpus lutescens* seeds, *Pritchardia pacifica* seeds, *Archontophoenix alexandrae* seeds, *Carpentaria acuminata* seeds, *Veitchia merrillii* seeds, *Roystonea regia* seeds, *Nannorrhops ritchieana* seeds, *Ravenea rivularis* seeds, *Trachycarpus fortunei* seeds, *Ravenala madagascariensis* seeds;
- safflower seeds such as for example *Carthamus arborescens* seeds, *Carthamus atractyloides* seeds, *Carthamus balearicus* seeds, *Carthamus boissieri* seeds, *Carthamus caeruleus* seeds, *Carthamus calvus* seeds, *Carthamus carduncellus* seeds, *Carthamus carthamoides* seeds, *Carthamus catrouxii* seeds, *Carthamus cespitosus* seeds, *Carthamus chouletteanus* seeds, *Carthamus creticus* seeds, *Carthamus curdicus* seeds, *Carthamus dentatus* seeds, *Carthamus dianius* seeds, *Carthamus duvauxii* seeds, *Carthamus eriocephalus* seeds, *Carthamus flavescens* seeds, *Carthamus fruticosus* seeds, *Carthamus glaucus* seeds, *Carthamus gypsicola* seeds, *Carthamus helenioides.* seeds, *Carthamus hispanicus* seeds, *Carthamus ilicifolius* seeds, *Carthamus lanatus* seeds, *Carthamus leucocaulos* seeds, *Carthamus lucens* seeds, *Carthamus mareoticus* seeds, *Carthamus matritensis* seeds, *Carthamus mitissimus* seeds, *Carthamus multifidus* seeds, *Carthamus nitidus* seeds, *Carthamus oxyacantha* seeds, *Carthamus pectinatus* seeds, *Carthamus persicus* seeds, *Carthamus pinnatus* seeds, *Carthamus plumosus* seeds, *Carthamus pomelianus* seeds, *Carthamus reboudianus* seeds, *Carthamus rechingeri* seeds, *Carthamus rhaponticoides* seeds, *Carthamus riphaeus* seeds, *Carthamus strictus* seeds, *Carthamus tamamschjanae* seeds, *Carthamus tenuis* seeds, *Carthamus tinctorius* seeds, *Carthamus turkestanicus* seeds, preferably *Carthamus tinctorius* seeds;
- sunflower seeds such as for example *Helianthus agrestis, Helianthus ambiguus, Helianthus angustifolius, Helianthus annuus, Helianthus anomalus, Helianthus argophyllus, Helianthus arizonensis, Helianthus atrorubens, Helianthus bolanderi, Helianthus brevifolius, Helianthus californicus, Helianthus camosus, Helianthus ciliaris, Helianthus cinereus, Helianthus coloradensis, Helianthus cusickii, Helianthus debilis, Helianthus decapetalus, Helianthus deserticola, Helianthus diffusus, Helianthus dissectifolius, Helianthus divaricatus, Helianthus divariserratus, Helianthus doronicoides, Helianthus eggertii, Helianthus exilis, Helianthus floridanus, Helianthus giganteus, Helianthus glaucophyllus, Helianthus glaucus, Helianthus gracilentus, Helianthus grosseserratus, Helianthus heterophyllus, Helianthus hirsutus, Helianthus intermedius, Helianthus laciniatus, Helianthus laetiflorus, Helianthus laevigatus, Helianthus lenticularis, Helianthus longifolius, Helianthus luxurians, Helianthus maximiliani, Helianthus membranifolius, Helianthus mollis, Helianthus multiflorus, Helianthus navarri, Helianthus neglectus, Helianthus niveus, Helianthus nuttallii, Helianthus occidentalis, Helianthus orgyaloides, Helianthus paradoxus, Helianthus pauciflorus, Helianthus petiolaris, Helianthus porteri, Helianthus praecox, Helianthus praetermissus, Helianthus pumilus, Helianthus radula, Helianthus resinosus, Helianthus salicifolius, Helianthus sarmentosus, Helianthus scaberrimus, Helianthus schwinitzii, Helianthus silphioides, Helianthus simulans, Helianthus smithii, Helianthus speciosus, Helianthus strumosus, Helianthus subcanescens, Helianthus subtuberosus, Helianthus tuberosus, Helianthus verticillatus,* preferably *Helianthus annuus* seeds;
- rape seeds such as *Brassica balearica* seeds, *Brassica carinata* seeds, *Brassica elongata* seeds, *Brassica fruticulosa* seeds, *Brassica hilarionis* seeds, *Brassica juncea* seeds, *Brassica napus* seeds, *Brassica narinosa* seeds, *Brassica nigra* seeds, *Brassica oleracea* seeds, *Brassica perviridis* seeds, *Brassica rapa* seeds, *Brassica rupestris* seeds, *Brassica tournefortii* seeds, preferably *Brassica napus* seeds;
- camelina seeds such as for example *Camelina alyssum* seeds, *Camelina microcarpa* seeds, *Camelina rumelica* seeds, *Camelina sativa,* preferably *Camelina sativa* seeds;
- hemp seeds can be for example *Cannabis sativa*;
- soybean seeds can be for example *Glycine albicans* seeds, *Glycine aphyonota* seeds, *Glycine arenaria* seeds, *Glycine argyrea* seeds, *Glycine canescens* seeds, *Glycine clandestina* seeds, *Glycine curvata* seeds, *Glycine cyrtoloba* seeds, *Glycine dolichocarpa* seeds, *Glycine falcata* seeds, *Glycine gracei* seeds, *Glycine hirticaulis* seeds, *Glycine lactovirens* seeds, *Glycine latifolia* seeds, *Glycine latrobeana* seeds, *Glycine max* seeds, *Glycine microphylla* seeds, *Glycine peratosa* seeds, *Glycine pindanica* seeds, *Glycine pullenii* seeds, *Glycine rubiginosa* seeds, *Glycine soja* seeds, *Glycine stenophita* seeds, *Glycine syndetika* seeds, *Glycine tabacina* seeds, *Glycine aff. tabacina* seeds, *Glycine tomentella* seeds, *Glycine sp. G1077* seeds, *Glycine sp. G1459* seeds, *Glycine sp. G1545* seeds, *Glycine sp. G1580* seeds, *Glycine sp. G1827* seeds, *Glycine sp. G2035* seeds, *Glycine sp. G2138* seeds, *Glycine sp. G2139* seeds, *Glycine sp. G2253* seeds, *Glycine sp. G2344* seeds, preferably soja seeds (*Glycine max seeds)*;
- lupine seeds can be for example *Lupinus albus* seeds, *Lupinus angustifolius* seeds, *Lupinus atlanticus* seeds, *Lupinus cosentinii* seeds, *Lupinus digitatus* seeds, *Lupinus hispanicus* seeds, *Lupinus luteus* seeds, *Lupinus micranthus* seeds, *Lupinus palaestinus* seeds, *Lupinus pilosus* seeds, *Lupinus princei* seeds, *Lupinus somaliensis* seeds;
- pea seeds can be for example *Pisum abyssinicum* seeds, *Pisum fulvum* seeds, *Pisum sativum* seeds, preferably *Pisum sativum* seeds

- flax seeds can be for example *Linum alatum seeds, Linum album* seeds, *Linum alpinum* seeds, *Linum arenicola* seeds, *Linum aristatum* seeds, *Linum austral* seeds, *Linum austriacum* seeds, *Linum berlandieri* seeds, *Linum bienne* seeds, *Linum campanulatum* seeds, *Linum carteri* seeds, *Linum catharticum* seeds, *Linum compactum* seeds, *Linum cratericola* seeds, *Linum dolomiticum* seeds, *Linum elongatum* seeds, *Linum flavum* seeds, *Linum floridanum* seeds, *Linum grandiflorum* seeds, *Linum hirsutum* seeds, *Linum hudsonioides* seeds, *Linum imbricatum seeds, Linum intercursum* seeds, *Linum kingii* seeds, *Linum leoni* seeds, *Linum lewisii* seeds, *Linum lundellii* seeds, *Linum macrocarpum* seeds, *Linum marginale* seeds, *Linum medium* seeds, *Linum monogynum* seeds, *Linum narbonense* seeds, *Linum neomexicanum* seeds, *Linum perenne* seeds, *Linum pratense* seeds, *Linum puberulum* seeds, *Linum pubescens* seeds, *Linum rigidum* seeds, *Linum rupestre* seeds, *Linum schiedeanum* seeds, *Linum strictum* seeds, *Linum subtrees* seeds, *Linum suffruticosum* seeds, *Linum sulcatum* seeds, *Linum tenuifolium* seeds, *Linum trigynum* seeds, *Linum usitatissimum* seeds, *Linum vernal* seeds, *Linum virginianum* seeds, *Linum westii* seeds, preferably *Linum usitatissimum* seeds;
- cotton seeds can be for example *Gossypium arboreum* seeds, *Gossypium herbaceum* seeds, *Gossypium raimondii* seeds, *Gossypium thurberi* seeds, *Gossypium barbadense* seeds, *Gossypium darwinii* seeds, *Gossypium hirsutum* seeds, *Gossypium mustelinum* seeds, *Gossypium tomentosum* seeds, *Gossypium australe* seeds, *Gossypium sturtianum* seeds, *Gossypium brevilanatum* seeds, *Gossypium kirkii* seeds, *Gossypium drynarioides* seeds.

The plant seeds of the ground plant seeds may be provided in the form of a seed meal. The plant seeds are advantageously oil and/or protein seeds, and preferably defatted oil and protein seed meal.

According to an advantageous embodiment of the invention, when the plant seed is from a proteaginous plant, such as a pea seed, then the whole seed is preferred.

By "grinding", grinded" or "ground", is meant any step aiming at obtaining a powder of plant seed. More particularly, the powder originating from this grinding has a volume median diameter Dv(50) comprised between 1 and 400 $\mu$m, preferably between 1 and 250 $\mu$m, more preferably between 10 and 200 $\mu$m. Preferably, the grinding is carried out so as to obtain a powder the Dv(50) of which is comprised between 5 and 100 $\mu$m, preferably between 10 and 75 $\mu$m, more preferably between 15 and 60 $\mu$m.

Alternatively, the grinding can be carried out so as to obtain a powder the volume diameter Dv(90) of which is comprised between 30 and 500 $\mu$m, preferably between 40 and 200 $\mu$m, more preferably between 50 and 150 $\mu$m.

A particularly suitable grinding mill for carrying out the grinding step according to the process of the invention is a knife mill of the attrition type, or a roller mill.

Preferably, the grinding is carried out on a plant seed and is carried out so as to limit the heating of said resulting powder. Forthis purpose, the grinding is carried out at a temperature less than 100°C, preferably less than 80°C, more preferentially less than 60°C.

Throughout the application, the temperatures and pressures are indicated under normal temperature and pressure (NTP) conditions.

The grinding can, optionally, be preceded by pre-grinding. The pre-grinding is a step aiming mainly at carrying out a first reduction in the form of particles. More particularly, by pre-grinding, is meant any step making it possible to obtain a powder, such as a powder of plant, having a Dv(50) comprised between 250 and 450 $\mu$m.

This pre-grinding is preferably followed by a fractionation step. In general, this fractionation is a sieving (also denoted "screening" in this particular case). This sieving is preferably carried out at a diameter approximately equal to the median-volume diameter Dv(50) as defined during the pre-grinding step for recovering the fines having a diameter less than the median-volume diameter and the oversize particles having a diameter greater than the median-volume diameter.

In the case of a plant meal, this pre-grinding followed by screening (or sieving) makes it possible to separate a fraction high in proteins ("the fines", used for the preparation of the ground meal) from a fraction low in proteins (i.e. the oversize particles). At the end of the optional pre-grinding and screening, grinding is carried out. This grinding can also be followed by a fractionation step. Such fractionation can be carried out by a cyclone. Other fractionation technologies by dry or wet route can equally well be applied, such as tribo-separation.

By "protein isolate", it is meant a native protein composition isolated from an organism having a protein content of at least 80 wt% by weight of the total dry matter (/dm), usually at least 90 wt%/dm and more advantageously at least 93 wt%/dm. Protein content is measured on dry matter by determining the nitrogen content using the Kjeldahl method and multiplying it by a conversion factor of 6.25. Advantageously, said organism is selected from the group consisting of plant, animal, yeast, fungus and bacteria. Preferably, the protein isolate is from a plant seed, such as those described above. More preferably, the protein isolate is sunflower seed protein isolate, rapeseed (canola seed) protein isolate, soybean seed protein isolate, lupine seed protein isolate, pea seed protein isolate, corn seed protein isolate or wheat seed protein isolate.

Starch is the main carbohydrate resource found in cereal and tuber plants, such as corn and cassava or potato, respectively. Starch is a polysaccharide existing under two forms: amylose (linear form) and amylopectin (branched form). The ratio of linear homopolymer amylose and highly branched amylopectin depends on the botanical origin of the starch. Native starch is brittle and does not possess any thermoplastic properties. Strong intermolecular hydrogen bonding between the amylose and amylopectin macromolecular network chains are responsible for the brittle nature of starch.

According to the invention, the metal oxide is a mineral crosslinker and can be any known metal oxide. Advantageously said metal oxide can be chosen from MgO, ZnO, $TiO_2$, $Fe_2O_3$, $Al_2O_3$, or $SiO_2$, or a mixture thereof, preferably from ZnO, $SiO_2$ or MgO, or a mixture thereof, more preferably from $SiO_2$ or MgO, or a mixture thereof, even more preferably from MgO.

Examples of mixture of metal oxides are : $MgO/ZnO$, $MgO/TiO_2$, $MgO/Fe_2O_3$, $MgO/Al_2O_3$, $MgO/SiO_2$, $ZnO/TiO_2$, $ZnO/Fe_2O_3$, $ZnO/Al_2O_3$, $ZnO/SiO_2$, $TiO_2/Fe_2O_3$, $TiO_2/Al_2O_3$, $TiO_2/SiO_2$, $Fe_2O_3/Al_2O_3$, $Fe_2O_3/SiO_2$, $Al_2O_3/SiO_2$, $MgO/ZnOTiO_2$, $MgO/ZnO/Fe_2O_3$, $MgO/ZnO/Al_2O_3$, $MgO/ZnO/SiO_2$, $MgO/TiO_2/Fe_2O_3$, $MgO/TiO_2/Al_2O_3$, $MgO/TiO_2/SiO_2$, $MgO/Fe_2O_3/Al_2O_3$, $MgO/Fe_2O_3/SiO_2$, $MgO/Al_2O_3/SiO_2$, $ZnO/TiO_2/Fe_2O_3$, $ZnO/TiO_2/Al_2O_3$, $ZnO/TiO_2/SiO_2$, $ZnO/Fe_2O_3/Al_2O_3$, $ZnO/Fe_2O_3/SiO_2$, $ZnO/Al_2O_3/SiO_2$, $TiO_2/Fe_2O_3/Al_2O_3$, $TiO_2/Fe_2O_3/SiO_2$, $Fe_2O_3/Al_2O_3/SiO_2$, $Fe_2O_3/Al_2O_3/SiO_2$, $MgO/ZnO/TiO_2/Fe_2O_3$, $MgO/ZnO/TiO_2/Al_2O_3$, $MgO/ZnO/TiO_2/SiO_2$, $MgO/ZnO/Fe_2O_3/Al_2O_3$, $MgO/ZnO/Fe_2O_3/SiO_2$, $MgO/ZnO/Al_2O_3/SiO_2$, $MgO/TiO_2/Fe_2O_3/Al_2O_3$, $MgO/TiO_2/Fe_2O_3/SiO_2$, $MgO/TiO_2/Al_2O_3/SiO_2$, $MgO/Fe_2O_3/Al_2O_3/SiO_2$, $ZnO/TiO_2/Fe_2O_3/Al_2O_3$, $ZnO/TiO_2/Fe_2O_3/SiO_2$, $ZnO/TiO_2/Al_2O_3/SiO_2$, $ZnO/Fe_2O_3/Al_2O_3/SiO_2$, $TiO_2/Fe_2O_3/Al_2O_3/SiO_2$, $MgO/ZnO/TiO_2/Fe_2O_3/Al_2O_3$, $MgO/ZnO/TiO_2/Fe_2O_3/SiO_2$, $MgO/ZnO/TiO_2/Al_2O_3/SiO_2$, $MgO/ZnO/Fe_2O_3/Al_2O_3/SiO_2$, $MgO/TiO_2/Fe_2O_3/Al_2O_3/SiO_2$, $ZnO/TiO_2/Fe_2O_3/Al_2O_3/SiO_2$, $MgO/ZnO/TiO_2/Fe_2O_3/Al_2O_3/SiO_2$, preferably a mixture $MgO/SiO_2$.

According to the invention the metal oxide can represent from 1% to 50%, preferably from 3% to 40%, more preferably 3% to 20%, even more preferably 5% to 20%, most preferably from 5% to 10% by weight based on the weight of the ground plant seeds, protein isolate, starch or mixture thereof.

According to the invention, the plasticizer can be any known plasticizing agents. Typical plasticizing agents include polyols such as for example glycerol, propylene glycol, ethylene glycol, alkyl and aryl derivatives of glycerol, alkyl and aryl derivatives of propylene glycol alkyl and aryl derivatives of ethylene glycol, carbohydrate sugars and other polyols such as for example glucose, fructose, sorbitol, isosorbide, maltitol, mannitol, and erythrytol oligomers and polymers of any of the earlier listed monomers may also be used such as for example polyglycerols, polyethylene glycol (PEG) polypropylene glycols (PPG), glucose syrups, maltodextrins, dextrins, modified starches, and mixtures thereof. Other non-volatile hydroxylated compounds may also be used as plasticizers.

Since an object of the present invention is an injectable and/or adhesive composition which contains only a minimum of, and if possible no, raw material of petroleum origin, the plasticizer, in particular the polyol, preferably is not of petroleum origin.

Preferably, the plasticizer is at least one polyol or a mixture of polyols, more preferably glycerol.

In the adhesive composition according to the invention, said plasticizer can represent 20% or more, preferably 30% or more by weight based on the weight of the ground plant seeds, protein isolate, starch or mixture thereof. Advantageously, said plasticizer can represent according to the invention 20% to 60%, preferably 30% to 60%, more preferably 30% to 50%, most preferably 40% by weight based on the weight of the ground plant seeds, protein isolate, starch or mixture thereof. At such contents said plasticizer improves water resistance properties.

It may be interesting to note that the pH of the adhesive composition according to the invention does not require control, which is not always the case with equivalent compositions known from the prior art.

One of the very preferred adhesive composition according to the invention can be an adhesive composition comprising or consisting of:

- ground plant seeds, wherein plant seeds are chosen from whole pea seeds, sunflower seed meal, rapeseed (or canola seed) meal and/or soy meal;
- a metal oxide chosen from $SiO_2$, MgO or ZnO or a mixture thereof, in a quantity of 10% by weight based on the weight of the ground plant seeds;
- glycerol as plasticizer, in a quantity of 40% by weight of the ground plant seeds; and
- optionally water.

In the injectable composition according to the invention, when no additional water is present, said plasticizer can represent 28% or more, preferably 30% or more, more preferably 35% or more, by weight based on the total weight of the injectable composition. Advantageously, said plasticizer can represent according to the invention 28% to 60%, preferably 30% to 60%, more preferably 30% to 50%, most preferably 30 to 35% by weight based on the total weight of the injectable composition.

In the injectable composition according to the invention, when additional water is present, the sum of the amounts of said plasticizer and additional water can represent 25% or more, preferably 28% or more, more preferably 30% or more, even more preferably 35% or more, by weight based on the total weight of the injectable composition.

Advantageously, the sum of the amounts of said plasticizer and additional water can represent according to the invention 25% to 60%, preferably 28% to 60%, more preferably 30% to 50%, most preferably 30 to 35% by weight based on the total weight of the injectable composition.

Furthermore, when additional water is present, the weight ratio of said plasticizer to additional water is preferably comprised between 0.5 and 2.0, more preferably between 0.8 and 1.5, such as, for example, 1.

These amounts of plasticizer in the injectable composition make it possible to use the injectable composition in an injection press.

One of the very preferred injectable composition according to the invention can comprise or consist of:

- ground plant seeds chosen from ground whole pea seeds, sunflower seed meal, rapeseed (or canola seed) meal and/or soy meal, preferably whole pea seeds;
- MgO as metal oxide, in a quantity of 5% by weight based on the weight of the ground plant seeds;
- glycerol as plasticizer, in a quantity of 5% to 40% by weight, preferably 10% to 35% by weight, based on the total weight of the injectable composition; and
- optionally water.

The injectable composition according to the invention can also be used as an adhesive composition.

The injectable and/or adhesive composition according to the invention can be used directly alone or added with other components (additives).

Preferably, the adhesive composition according to the invention can also comprise urea, a surfactant such as a water-repellent agent such as wax.

Optionally, the injectable composition according to the invention can also comprise urea, a surfactant such as a water-repellent agent such as wax.

By "water-repellent agent", is meant any substance the role of which is to prevent or reduce the contact of water with, or its penetration into a material.

More generally, the injectable and/or adhesive composition according to the invention can comprise one or more additive agents chosen from the group constituted by:

- fillers, preferably nanofillers, such as calcium carbonate, clay or nanoclay (e.g. montmorillonite, bentonite) such as those sold under the trade names CLOISITE® Na+, CLOISITE®30B, CLOISITE®20A, CLOISITE®10A, natural biopolymers such as chitosan or cellulose, metal such as silver, copper or gold, or metal oxide such as silver oxide ($Ag_2O$),
- fibers, in particular short fibers, long fibers continuous fibers, for example from glass, carbon or aramid,
- thickeners or texturizing agents or also gelling agents,
- surfactants such as siloxanes,
- antioxidants such as polyphenols,
- antifoaming agents,
- antimicrobial agents such as oxidants, nisin,
- antibacterial agents such as nitrogen derivatives,
- fungicides such as sulphur-contai ning products,
- preservatives such as citric acid, paraben,
- pigments such as mineral pigments, e.g. titanium dioxide, or carbon black,
- agents improving moisture resistance or water-repellent agents such as wax,
- pH modulators such as a base (e.g. NaOH) or an acid (e.g. HCl),
- anti-adhesive (e.g. processing aids type stearate) or composite release agents, and
- fire-resistant or fire retardant agents.

A solid binder can be also prepared from the adhesive composition according to the invention by heating and preferably thermopressing thereof. The heating temperature is generally comprised between 100 and 300°C, more preferably between 140 and 250°C.

The invention also relates to a process for preparing a composition according to the invention wherein in a first step, ground plant seeds, protein isolate and/or starch can be mixed with at least one metal oxide until complete mixing and, in a second step, at least one plasticizer can be added, optionally water (additional water) being added during the first or second step.

If the composition is an adhesive composition, the optional water can be added during the first step.

Preferably, if the composition is an injectable composition, the optional water is added during the second step.

The invention also relates to an article made from the injectable composition.

Advantageously, the article made from the injectable composition is obtained *via* a process comprising the

EP 3 816 251 A1

steps of:

(i) providing an injectable composition according to the invention,
(ii) filling an extruder with the injectable composition,
(iii) extruding the injectable composition into a mold.

Advantageously, the injectable composition is prepared according to the process for preparing an injectable composition mentioned above.

Advantageously, the extruder comprises an extruder screw and a nozzle. Preferably, the temperature inside the extruder screw ranges from 50°C to 165°C, more preferably from 60°C to 155°C, even more preferably from 70°C to 145°C. Preferably, the nozzle temperature is comprised between 120°C and 170°C, more preferably between 130°C and 160°C, even more preferably between 140°C and 155°C.

Preferably, the mold temperature is comprised between 15°C and 50°C, more preferably between 20°C and 40°C.

Preferably, the extruder and the mold are part of an injection press.

In a particular embodiment, the article made from the injectable composition further comprises a lignocellulosic material, thereby resulting in a lignocellulosic composite.

Therefore, the invention also relates to a lignocellulosic-based composite comprising an injectable and/or adhesive composition according to the invention and a lignocellulosic material. Preferably, the injectable and/or adhesive composition is the only non-lignocellulosic component.

Generally, lignocellulosic-based composites can be formed from small dimension pieces of cellulosic material that can be bonded with an adhesive (i.e., a binder). In general, solid wood is fragmented into smaller pieces such as strands, fibers, particles, chips or even powder. An adhesive composition then is added to the wood component. The resulting mixture can be subjected to heat and pressure resulting in a composite.

The injectable composition according to the invention can act as a matrix for lignocellulosic-based composites. In this embodiment, the injectable composition and the lignocellulosic component are mixed prior to injection, and the resulting mixture can then be injected with an extruder to fill a mold.

By "lignocellulosic material", is meant more particularly straw, paper, cardboard, wood strands, wood veneer, wood particles, wood fibers, wood powder (or wood flour), preferably wood strands, wood veneer, wood particles, wood fibers, wood powder (or wood flour). The wood particles can be chips, flakes, sawdust or any other waste based on wood originating from a sawmill.

When the lignocellulosic material comprises wood, said wood may comprise at least one of pine wood, spruce wood, birch wood and beech wood.

The use of an adhesive composition according to the invention makes it possible to improve the properties of the article(s) based on lignocellulosic material(s) comprising them.

In particular, these articles have a better water resistance (reduced swelling rate) with respect to articles comprising an adhesive composition based on ground plants seeds alone, ground plants seeds and polyol only, ground plants seeds and metal oxide only. These advantages are given in greater detail in examples. In a certain particular embodiment, these articles further have an increased stress resistance (MOR).

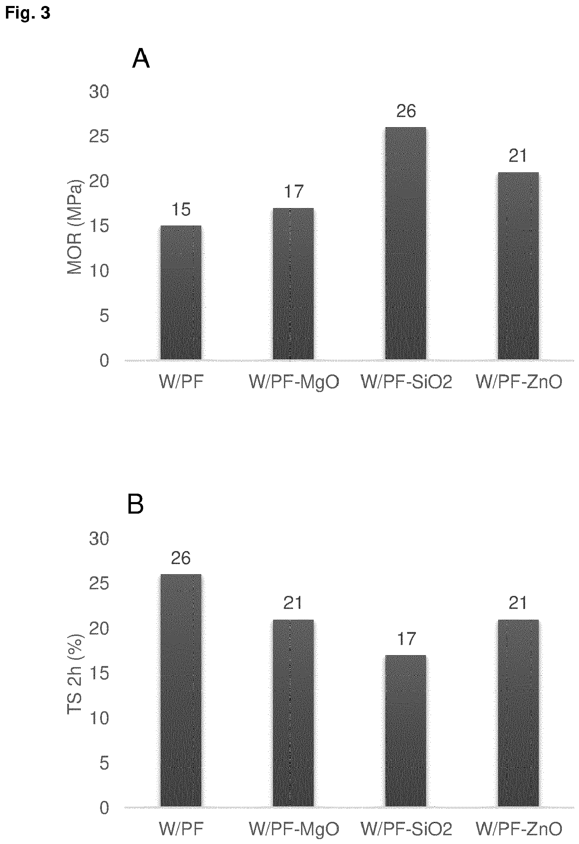

It can be noted for example that ground pea seed alone used as adhesive composition has a poor thickness swelling property (see Figure 3B).

Advantageously, the article according to the invention is a lignocellulosic composite, in particular a lignocellulosic composite board. A lignocellulosic composite is a combination of lignocellulosic materials and an injectable and/or adhesive composition called a matrix, wherein the lignocellulosic materials and the matrix keep their identity, do not dissolve or do not mix completely. For that reason, they can be physically identifiable on a macroscopic scale.

More particularly, the article is made of glued-laminated wood, plywood or a composite wood board such as a laminated board or oriented strand board (OSB), a particleboard or chipboard, or a fiberboard.

According to the invention, the lignocellulosic-based composite can at least comprise or consist of:

• lignocellulosic material, preferably wood, more preferably wood particles,
• 10%-95%, preferably 10%-60% by weight (dry matter) of the injectable and/or adhesive composition of the invention, based on the weight of the lignocellulosic-based composite.

Preferably, the composition comprised in the lignocellulosic-based composite is an adhesive composition.

According to the invention, a preferred example of lignocellulosic-based composite can comprise

- between 40% and 50% w/w, preferably 45% w/w of wood;
- between 17% and 27% w/w, preferably 22% w/w of additional water;

- between 17% and 27% w/w, preferably 22% w/w of ground whole pea seeds;
- between 1% and 3% w/w, preferably 2.2 % w/w of $SiO_2$; and
- between 5% and 15% w/w, preferably 8.8% w/w of glycerol,

the weights being given based on the weight of the lignocellulosic-based composite.

The adhesive composition according to the invention makes it possible in particular to improve the properties of an article comprising it.

In particular, the inventors demonstrated that the articles based on lignocellulosic materials comprising an adhesive composition according to the invention had improved properties such as Modulus of Rupture (MOR) or Thickness swelling (TS, water resistance) properties for the articles.

The invention also relates to a process for the manufacture of a lignocellulosic-based composite according to the invention. Advantageously, the process comprises the following steps:

(i) bringing a lignocellulosic material into contact with the adhesive composition according to the invention, and
(ii) heating and/or pressing the adhesive composition.

The heating temperature is generally comprised between 100 and 300°C, more preferably between 140 and 250°C. Preferably, heating the adhesive composition is carried out by thermo-pressing (step of concomitant heating and pressing). Preferably, the pressing time is less than 10 min, preferably less than 5 min.

Advantageously, the lignocellulosic material is wood particles, fibers or powder. These are then brought into contact with the adhesive composition according to the invention. This bringing into contact can be carried out by mixing wood particles with the composition according to the invention or alternatively by spraying the composition according to the invention onto the wood particles. The wood particles thus brought into contact with the adhesive composition according to the invention are then placed in a mold, pressed and heated in order to harden the adhesive composition.

More particularly, a lignocellulosic-based board is usually manufactured according to the following process:

- Preparing the raw lignocellulosic material (grinding, grading, drying), in particular in the form of strands, particles, fibers or powder,
- Mixing the prepared lignocellulosic material with the adhesive composition,
- Forming of the particle mat,
- Thermo-pressing, and optionally,
- Finishing the boards.

Finally, the invention relates to the use of a composition according to the invention as, or for the preparation of, an adhesive composition.

Preferably, the adhesive composition is an adhesive composition for a lignocellulosic material, such as wood-based materials.

The invention also relates to the use of an injectable and/or adhesive composition according to the invention in the preparation of a lignocellulosic-based composite.

The invention will be better understood in the light of the following examples, given by way of illustration, with reference to:

- Figure 1 that is a diagram illustrating the modulus of rupture (MOR) values of composites based on wood and a matrix composed of pea flour and $SiO_2$ (PF-$SiO_2$) depending on the wood/matrix ratio;
- Figure 2 that shows composites prepared with different wood/matrix (W/PF-$SiO_2$) ratios of (A) 95/5; (B) 90/10 and (C) 60/40;
- Figure 3 that is a diagram illustrating the effect of different metal oxides on Wood/Pea Flour matrix (W/PF), 60/40 wt/wt%, composites modulus strength (A) and thickness swelling properties (B);
- Figure 4 that is a diagram illustrating the effect of glycerol content on Wood/Pea Flour-$SiO_2$ composites modulus strength (A) and thickness swelling properties (B);
- Figure 5 that is a diagram illustrating the effect of different metal oxides on plasticized W/PF-Gly40 (60 wt% wood/40 wt% PF-Gly40) composites modulus strength (A) and thickness swelling properties (B);
- Figure 6 that is a diagram illustrating the MOR (A) and TS (B) properties of composites based on wood and a matrix composed of ground whole pea seeds (pea flour), soybean meal, sunflower meal or ground corn distillers grains (corn flour), either native or mixed with $SiO_2$ and/or with glycerol;
- Figure 7 that is a diagram illustrating the injection pressure measured during injection of a matrix consisting of ground whole pea seeds (pea flour) mixed with MgO, and water and/or glycerol, depending on the amount of water and/or glycerol in the matrix;

- Figure 8 that is a diagram illustrating the density of a matrix consisting of ground whole pea seeds (pea flour) mixed with MgO, and water and/or glycerol, depending on the amount of water and/or glycerol in the matrix;
- Figure 9 that is a diagram illustrating the density of a matrix consisting of ground whole pea seeds (pea flour) mixed with MgO, and water and/or glycerol, depending on the injection pressure measured during its injection;
- Figure 10 that is a diagram illustrating the maximum flexural stress (or MOR) of a matrix consisting of ground whole pea seeds (pea flour) mixed with MgO, and water and/or glycerol, depending on the amount of water and/or glycerol in the matrix;
- Figure 11 that is a diagram illustrating the flexural modulus of a matrix consisting of ground whole pea seeds (pea flour) mixed with MgO, and water and/or glycerol, depending on the amount of water and/or glycerol in the matrix;
- Figure 12 that is a diagram illustrating the maximum tensile stress of a matrix consisting of ground whole pea seeds (pea flour) mixed with MgO, and water and/or glycerol, depending on the amount of water and/or glycerol in the matrix;
- Figure 13 that is a diagram illustrating the Young modulus of a matrix consisting of ground whole pea seeds (pea flour) mixed with MgO, and water and/or glycerol, depending on the amount of water and/or glycerol in the matrix;
- Figure 14 that is a diagram illustrating the thickness swell (TS) properties at ambient temperature of a matrix consisting of ground whole pea seeds (pea flour) mixed with MgO, and water and/or glycerol, depending on the amount of water and/or glycerol in the matrix;
- Figure 15 that is a diagram illustrating the TS properties at 80°C of a matrix consisting of ground whole pea seeds (pea flour) mixed with MgO, and water and/or glycerol, depending on the amount of water and/or glycerol in the matrix;
- Figure 16 that is a diagram illustrating the water adsorption (WA) properties at ambient temperature of a matrix consisting of ground whole pea seeds (pea flour) mixed with MgO, and water and/or glycerol, depending on the amount of water and/or glycerol in the matrix.

### Example 1: Biobased composites from plant seed flour, $SiO_2$ and glycerol

### Materials

Whole yellow peas (*Pisum sativum*) and soybean meal (*Glycine max*) were purchased from Sanders (France) and ground in order to obtain pea flour (PF) with a Volume Diameter (Dv) of Dv(10) of 7 $\mu$m, Dv(50) of 25 $\mu$m, and Dv(90) of 77 $\mu$m and soy flour (SF) with a diameter of Dv(10) of 15 $\mu$m, Dv(50) of 43 $\mu$m, and Dv(90) of 115 $\mu$m.

Total crude protein content of PF and SF obtained using Kjeldhal procedure with a nitrogen-to-protein conversion factor of 6.25 was 19 % and 48 %, respectively.

Glycerol was provided by Oleon (France) and used as plasticizer. Magnesium oxide, MgO (40 $\mu$m) and silicon dioxide, $SiO_2$ (250 $\mu$m) were purchased from Fluka. Zinc oxide, ZnO (30 nm) was purchased from Acros Organics. Wood particles were spruce from Brunswick (Germany) with average particle size of 1.25 - 3.15 mm and supplied by Fraunhofer Institute for Wood Research.

### Matrices preparation

#### *Matrix based on proteaginous materials reinforced with metal oxides*

Reinforced pea flour based matrices were prepared by blending PF with different metal oxides. Matrices were prepared by adding 10% by weight, based on pea flour weight, of $SiO_2$, MgO or ZnO to pea flour and the whole mixtures were dispersed into distilled water with a total solid content of 60 wt%. The PF-$SiO_2$, PF-MgO and PF-ZnO matrices were further used to prepare the composites.

A similar procedure was carried out using soy flour. A solution of soy flour and 10 wt% $SiO_2$ (SF-$SiO_2$), based on soy flour weight, with total solid content of 60 % was prepared and used as matrix for composites.

#### *Plasticization of matrix based on proteaginous materials reinforced with metal oxides*

Glycerol was used in the formulation to improve softness (or elasticity) of the PF-$SiO_2$ based composites.

Different amounts of glycerol were added to PF-$SiO_2$ blend (0, 5, 10, 30, 40 and 50 % based on dry weight of PF) and the mixtures were thoroughly blended at room temperature for 10 min to obtain PF-$SiO_2$-Glyx, wherein x represents the percentage of glycerol by weight based on ground plant seed dry weight (x being comprised between 0 and 50).

For SF matrix, only one amount of glycerol was tested (40 wt% based on SF dry weight) and added to the SF-$SiO_2$ mixture and the whole solution was blended for 10 min at room temperature to obtain SF-$SiO_2$-Gly40 matrix.

**Preparation of composites**

Different composites were prepared by mixing PF-SiO$_2$ matrix solution to wood particles with different ratios in a Minneapolis Planetary mixer, in order to determine the best matrix and wood particles amounts.

For the composites based on PF-MgO-Gly40, PF-ZnO-Gly40 or PF-SiO$_2$-Gly40 matrices, the amount of matrix and wood particles was kept at 40 wt% dry matter on the weight of composite and 60 wt% dry matter on the weight of composite, respectively.

All blends were then hot-pressed at 150 °C, for 3 min at pressure of 15 metric tons (MeT), using a CARVER hot press, to prepare composites with 4 mm thickness and 700 kg/m$^3$ density.

**Mechanical property testing**

The standards as stated in this application are those current at the date of filing.

**Mechanical strength:**

The measurement is carried out by a 3-point bending test intended to assess the maximum stress, and the modulus of rupture (MOR). This measurement is based on the standard NF EN 310 and is carried out on an Imal apparatus (IBX 700, Imal SRL, Italy). The modulus of rupture (MOR) was determined on rectangular strips of 148 x 40 x 4 mm (conditioned at 65% relative humidity and 20°C) at a crosshead speed of 5 mm/min. The distance between supports and the width of each support are 120 mm and 54 mm, respectively. The average MOR were obtained on the basis of triplicate.

**Water resistance:**

The measurement of swelling in thickness of the wood board after total immersion in water (according to standard NF EN 317) is carried out at ambient temperature, the thickness measurements being carried out at t0, t+2 hours, on average on 3 samples and is carried out on an Imal apparatus (IBX 700, Imal SRL, Italy).

The dimensional stability of composites with a nominal side length 50.0 x 50.0 x 4 mm (conditioned at 65% relative humidity and 20°C) was determined by measuring the increase in thickness of the specimens after immersion in water at 2 h. The specimens were immersed in water at room temperature and after a period of 2 h, the samples were surface dried using blotting paper and then immediately weighed.

The percentage of thickness swelling after 2 hours (TS$_{2h}$) was calculated as shown in equation (1) :

$$TS_{2h}\,(\%) = \frac{t2-t1}{t1}\ x\ 100$$

where *t1* is thickness at specimen center before soaking and t2 is the thicknesses of test specimens after soaking for 2 h.

**Results**

This example is focused on the study of the thermal and mechanical behavior of reinforced agro-materials based on pea flour. Composites where first prepared by mixing different ratios of wood particles and PF-SiO$_2$ matrix and the mechanical performances of the final composites were evaluated and compared.

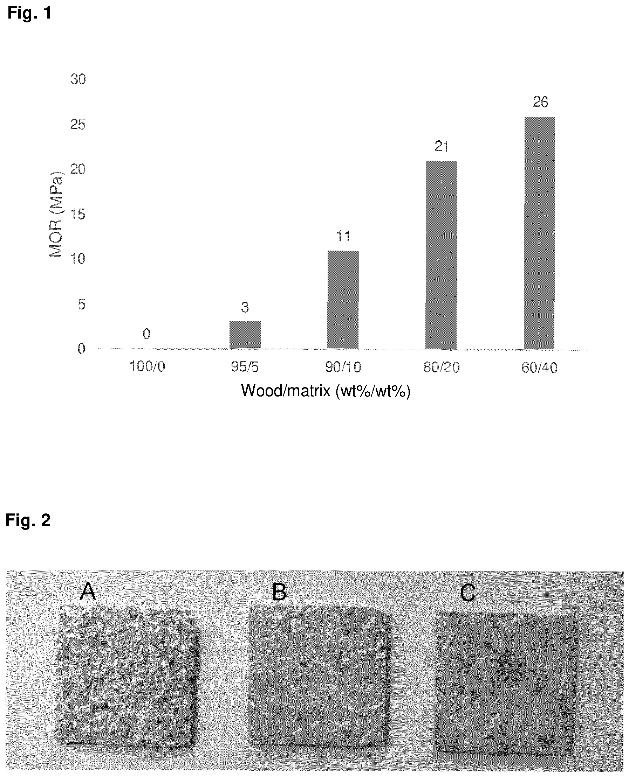

The modulus of rupture (MOR) results obtained from the three-point bending tests are illustrated in Figure 1.

The MOR corresponds to the fibers resistance to bending deformation and is an important parameter of the mechanical properties. When the amount of matrix was lower than 10% wt, the composites had extremely poor properties, and exhibited a MOR value of 3 MPa.

But increasing amount of PF-SiO$_2$ from 10 wt% to 40wt% involved increasing MOR to 11 MPa and 26 MPa, respectively, and thus increased composite strength. However, when the matrix content exceeds 40% wt, the composites remained extremely brittle. Based on these results, the optimal matrix amount was determined as 40 wt% mixed with 60 wt% of wood particles.

These mechanical characterizations are in good correlation with macroscopic observations (see Figure 2).

At low matrix level of 5 % wt (A), the surface of composite was irregular and rough but when matrix level was over 10 wt% (B and C) the composites where strong with a homogeneous surface aspect.

As it can be seen on Figure 3, W/PF-SiO$_2$ exhibited higher MOR value (26 MPa) compared to W/PF (15 MPa) showing the good reinforcement effect of SiO$_2$ particles probably due to strong interactions between SiO$_2$ particles and

proteins and starch molecules of pea flour.

The silicon dioxide particles are likely to bond with hydroxyl groups and through possible hydrogen or Van der Waals bonds of starch or proteins macromolecules. The strengthening molecular forces between particles and pea flour molecules enhance the composites properties as determined by flexural modulus. Composites were also prepared from PF blended with different metal oxides such as MgO and ZnO particles and the final properties were compared to that obtained from $SiO_2$ filler (see Figure 3). All formulations with metal oxides exhibited higher strength values and lower thickness swelling. However, the highest strength value was found with $SiO_2$.

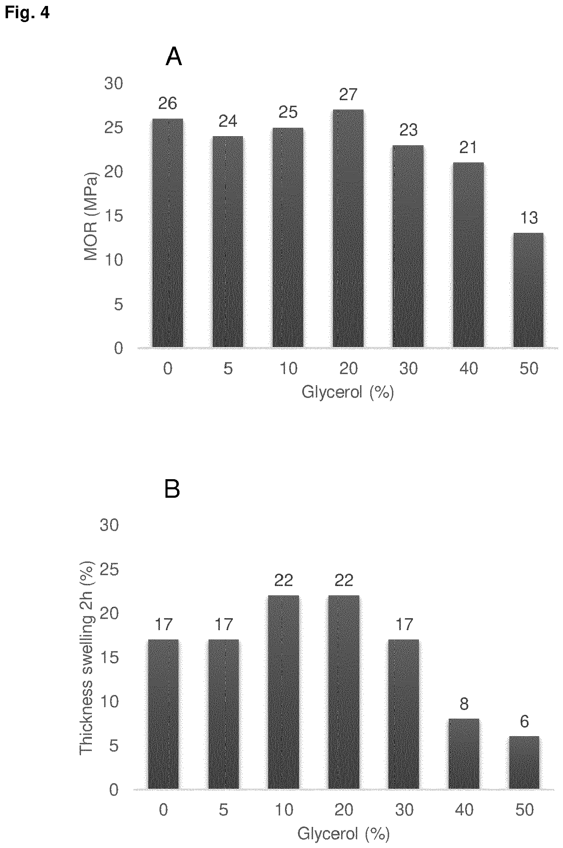

W/PF composites are hard and brittle. Therefore, it is necessary to use a plasticizer in the production of composites to increase the softness (or elasticity). The most common plasticizer used in composites fabrication is glycerol. Different amounts of glycerol were thus added into PF-$SiO_2$ formulation and the mechanical properties and water resistance were evaluated and compared (see Figure 4). As clearly shown, adding glycerol weakened the mechanical properties of the composites due to the plasticization effect.

However, surprisingly, for high amount of glycerol over 30 wt%, the water resistance of the composites was improved.

Glycerol is a hydrophilic molecule that generally increase water uptake. This improvement of water resistance could be due to some interactions between hydroxyl groups of glycerol and pea flour molecules, decreasing the number of polar functions in the overall material.

The composites prepared from PF-$SiO_2$ and 40 wt% of glycerol exhibited interesting MOR value and great water resistance.

Moreover, the final composites exhibited a smooth and homogeneous surface and showed good flexibility.

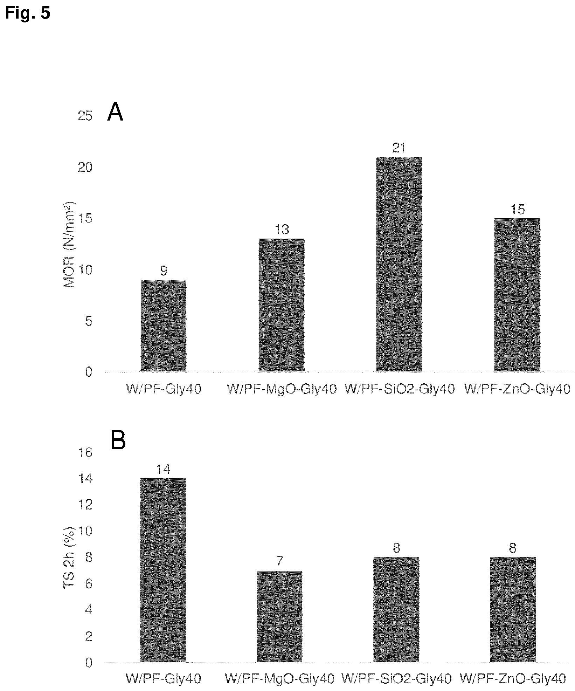

Figure 5 shows the MOR and thickness swelling properties of plasticized composites (with 40%wt of glycerol) prepared with PF matrix reinforced with different metal oxides.

It is shown that glycerol lowered the MOR values of all materials due to plasticization effect as observed previously.

However, compared to W/PF-Gly40 composite, the reinforced matrices exhibited higher MOR values, giving composites with satisfactory mechanical properties. Moreover, it is shown that blending with metal oxides further increased the swelling properties of the materials. The bests results were find with $SiO_2$ particles.

**Conclusion:**

In conclusion, hybrid organic-inorganic matrices based on pea flour and $SiO_2$, ZnO or MgO are presented as effective and sustainable matrices for composites. The composites exhibited higher strengths and better water resistance compared to W/PF composite.

Moreover, addition of glycerol molecules into the formulation not only increased flexibility of the whole composites but also increased the water resistance despite the high hydrophilic properties of glycerol molecules.

Moreover, PF blended to $SiO_2$ and glycerol obtains satisfactory flexural strength, over 13 MPa (see figure 4A).

### Example 2: Biobased composites

A lignocellulosic-based composite was prepared:

- 45% w/w of wood;
- 22% w/w of additional water;
- 22% w/w of pea flour;
- 2.2 % w/w of $SiO_2$; and
- 8.8% w/w g of glycerol;

the weight being given based on the weight of the lignocellulosic-based composite.

### Example 3: Comparison of composite mechanical properties prepared from different raw materials

**Materials**

Soybean meal, sunflower meal (by-product obtained after pressure and solvent (hexane) extraction of oil from seeds) and corn distillers grains (the solid residue left over after distillation in corn ethanol production) were purchased from Sanders (France) and ground thanks an impact mill from Hosokawa in order to obtain soy flour (SF), with a diameter of Dv(10) of 15 $\mu$m, Dv(50) of 43 $\mu$m and Dv(90) of 115 $\mu$m; sunflower flour (SuF)) with a diameter of Dv(10) of 6 $\mu$m, Dv(50) of 32 $\mu$m and Dv(90) of 150 $\mu$m and corn flour (CF) with a diameter of Dv(10) of 7 $\mu$m, Dv(50) of 31 $\mu$m and

Dv(90) of 115 $\mu$m. Total crude protein content of SF, SuF and CF obtained using Kjeldhal procedure with a nitrogen-to-protein conversion factor of 6.25 was 48 %, 40 % and 20 %, respectively.

**Preparation of composites**

Wood composites were prepared from different raw materials and compared with those prepared from pea flour. Different matrix formulations were tested. The composites were prepared using native raw materials, blended with $SiO_2$, blended with Glycerol or blended with $SiO_2$ and glycerol, and are dispersed into distilled water with a total solid content of 60 wt%. The amount of $SiO_2$ and glycerol was 10 wt% and 40 wt%, respectively, based on raw material dry weight. The ratio of matrix and wood particles was kept at 40 wt% dry matter on the weight of the composite and 60 wt% dry matter on the weight of the composite, respectively. All blends were dry with an oven to decrease the amount of water (30 min at 50°C) and get a residual moisture content lower than 12 wt% of dry wood. Then they were hot-pressed at 150 °C, for 3 min at pressure of 15 metric tons (MeT), using a CARVER hot press, to prepare composites with 4 mm thickness and 700 kg/m$^3$ density.

**Mechanical property testing**

Three-point bending tests were determined using an Imal apparatus (IBX 700, Imal SRL, Italy) and based on the standard NF EN 310. The modulus of rupture (MOR) was determined on rectangular strips of 148 x 40 x 4 mm (conditioned at 65% relative humidity and 20°C) at a crosshead speed of 5 mm/min. The distance between supports and the width of each support are 120 mm and 54 mm, respectively. All experiments were repeated at least three times. Averages of the data and their standard deviations were calculated and presented in figures as error bars.

**Water resistance**

The measurement of swelling in thickness of the wood board after total immersion in water (according to standard NF EN 317) is carried out at ambient temperature using an Imal apparatus (SW200 or BT200, Imal SRL, Italy).
The dimensional stability of composites with a nominal side length 50.0 x 50.0 x 4 mm (conditioned at 65% relative humidity and 20°C) was determined by measuring the increase in thickness of the specimens after immersion in water at 2 h. The specimens were immersed in water at room temperature and after a period of 2 h, the samples were surface dried using blotting paper and then immediately weighed.
The percentage of thickness swelling after 2 hours ($TS_{2h}$) was calculated as shown in equation (1) (see Example 1).

**Results**

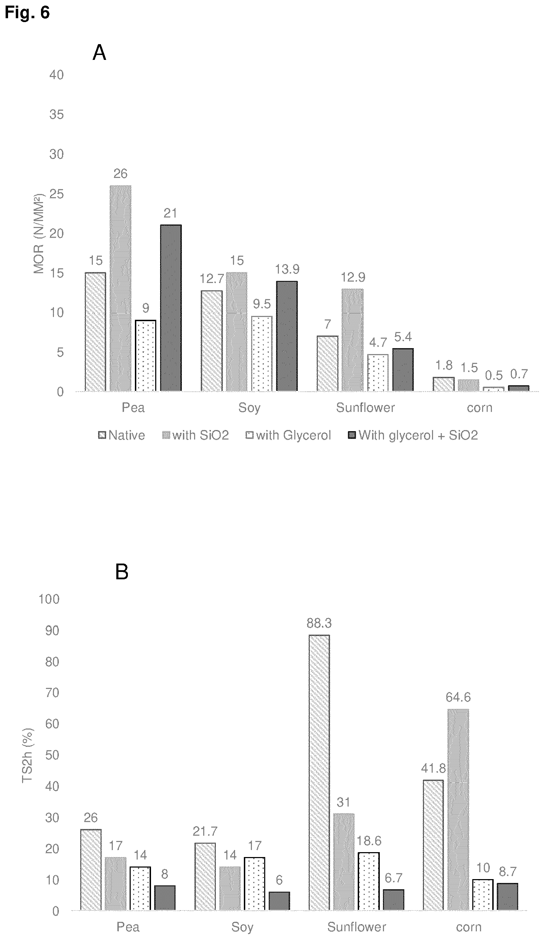

Fig. 6A shows the modulus of rupture (MOR) and Fig. 6B the thickness swelling (TS) properties of different composite formulations obtained from pea flour, soy flour, sunflower flour and corn flour. Except corn flour, all raw materials blended with $SiO_2$ nanoparticles exhibited higher MOR value and lower thickness swelling properties compared to the native counterpart. However, for all materials, addition of glycerol weakened the mechanical properties of the composites due to the plasticization effect lowering the MOR values but improved the water resistance of the composites.
The composites prepared from soy flour, sunflower flour and pea flour blended with 10 % of $SiO_2$ and 40 % of glycerol exhibited interesting MOR value and good water resistance. However, when corn flour was used in the formulation, poor mechanical properties were obtained, maybe due to the additional process steps that were carried out to obtain corn distillers grain (in particular, fermentation and distillation) that can result in a low interaction between this raw material and $SiO_2$ nanoparticles. The highest MOR value was found with pea flour as raw material while the TS properties were similar for all materials. Based on the results, pea flour is one of the most interesting raw materials to prepare the biobased composites.

**Example 4: Injection molding of composition for bio material end use application**

The aim of this study is to evaluate the injectability of compositions and their associated performances by using various plasticizers to adjust mechanical performances and improve injectability. The compositions were obtained by mixing pea flour with magnesium oxide.

**Raw material**

For this study, a micronized pea flour (PF) with a d50 of 40 $\mu$m was used as a biopolymer, formulated with a 5% wt of a MgO powder (d50 of 10 μm) based on pea flour weight powder. The flour was obtained thanks to an impact mill from Hosokawa and the MgO was blended with pea flour thanks to a Gedu kettle. The PF was stirred at 35 rpm under room temperature. The MgO was introduced during 10 min in the kettle and kept running an additional 30 min until the blend PF+MgO looks homogeneous. Moisture content of the blend is at 9 wt% with respect to the dry weight of the composition.

Prior to injection molding, three types of additives have been combined with the PF+MgO blend: water (E), glycerol (G), and a blend 50/50 of water and glycerol (EG), in an amount ranging from 20 wt% to 35 wt% of the total composition (when water has been used, this percentage corresponds to the additional water and the moisture already present in the blend).

Blends of PF+MgO+additive have been done by pouring the additive into a 20L plastic drum first and then with the blend of PF+MgO. The drum is first stirred gently with a spatula and then closed and stirred manually to incorporate the additive in the PF+MgO blend for about 5 min. A visual inspection is done to qualify the quality of the additive distribution by having some homogeneous "pellet" shape aspect. If the aspect is not good enough, the drum is reclosed and stirred again until the homogeneous "pellet" shape is achieved.

### Equipment and test method

### Equipment used

The injection press used was a Negri Bossi VE160-720 with an extruder screw diameter of 45 mm and an injectable volume of 360 cm$^3$. The maximum injection pressure is 2000 bars and the closing force was 1600 kN (160 tons).

Screw temperature profile was set to 70°C - 120°C - 135°C inside the extruder. Nozzle temperature was set to 140°C and mold temperature to 20°C. Only one condition (EG at 25 wt%) was set to a slightly different temperature profile (70°C-120°C-145°C), a slightly higher nozzle temperature (155°C) and mold temperature (40°C) because of some injectability limitation observed.

The mold used was designed to get one flexural and one tensile strength test sample following respectively ISO 178:2010 and ISO 527-4:1997.

All samples were conditioned at least 3 weeks to ensure weight stabilization (water evaporation) under 25°C and 60%RH (Relative Humidity).

### Test method

The injectability has been characterized by injection pressure measured during the trial (once it was possible to extrude the product).

Density was determined by measuring the sample dimension and sample weight after conditioning. Density then corresponds to the ratio between sample weight over sample volume in kg/m$^3$.

Mechanical performances were measured following ISO 178:2010 and ISO 527-4:1997 standards.

Water resistance was done following NF EN 317 using water at room temperature for 24h immersion time and with warm temperature (80°C) for 5 minutes immersion time. Thickness and sample weight were measured before and after immersion in water to determine Thickness Swelling (TS) and Water Adsorption (WA).

### Results

### Injectability evaluation and density

The first quantification of injectability was done by trying to inject various compositions (PF+MgO+additive) with various rate and type of additive. It was observed if the machine has the capacity to fill the mold and the results are in Table 1.

Table 1

| Additive amount (wt%) | Water | Water + glycerol | Glycerol |
|---|---|---|---|
| 20.0 | Yes | No | No |
| 22.5 | Yes | No | No |
| 25.0 | Yes | Yes | No |
| 27.5 | Yes | Yes | No |

(continued)

| Additive amount (wt%) | Water | Water + glycerol | Glycerol |
|---|---|---|---|
| 30.0 | Yes | Yes | Yes |
| 35.0 | Yes | Yes | Yes |

When "Yes" is indicated, it means that the product was thin enough to fill the mold. On the contrary, "No" means that the product was too thick to fill the mold. One can observe that with water it was possible to process the product from 35 wt% down to 20 wt% of water. Below, filling the mold was too complicated. Glycerol could be used from 35 wt% down to 30 wt%. It means that glycerol is a less effective solvent to decrease the viscosity of the blend (PF+MgO) versus water. This is consistent with the fact that glycerol is a bigger molecule than water and could have difficulties to migrate into within the Pea flour (PF) network (proteins and starch particles). The additive EG (50 wt% water and 50 wt% glycerol) enabled to go down to 25 wt% which is an intermediate level of performance regarding processability. To be noticed that at 25 wt% of EG in the composition (PF+MgO) required a slight increase of temperature profile, nozzle temperature and mold temperature.

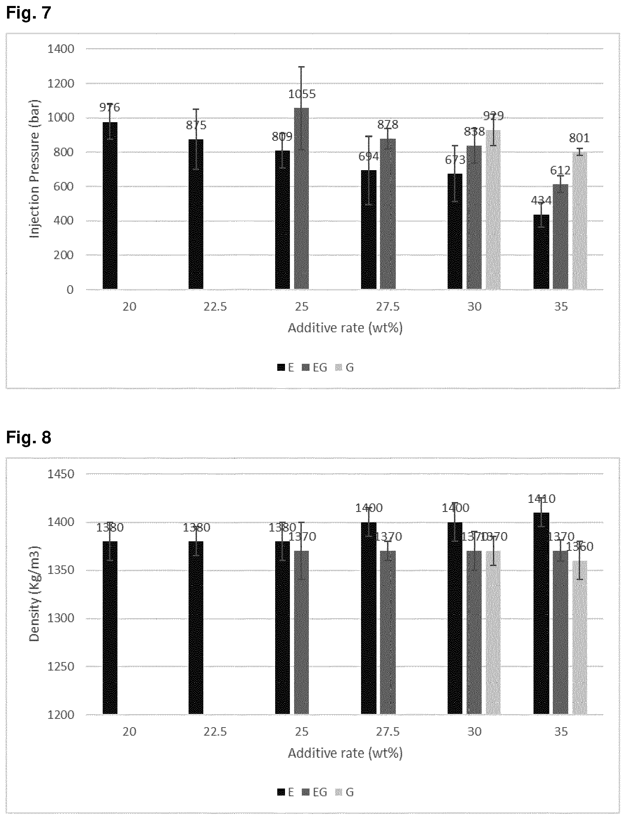

To get a more quantitative assessment of processability versus additive nature and amount, the injection pressure was recorded and the results appear on Figure 7.

One can observe a decrease of injection pressure with an increase of additive amount for a given additive type. For water, it decreases from 976 bar at 20 wt% to 434 bar at 35 wt%. The lowest pressure was obtained for 35 wt% of water, which confirms that water is the most efficient additive. At 30 wt% and 35 wt% of additive, all additive nature (water, glycerol and water+glycerol) could have been processed. The additives could be ranked from the most effective to the less effective as follows: water then water and glycerol and then glycerol only. These results confirm the first assessment made with mold filling evaluation.

Density of samples was measured for each additive rate and nature as reported in Figure 8.

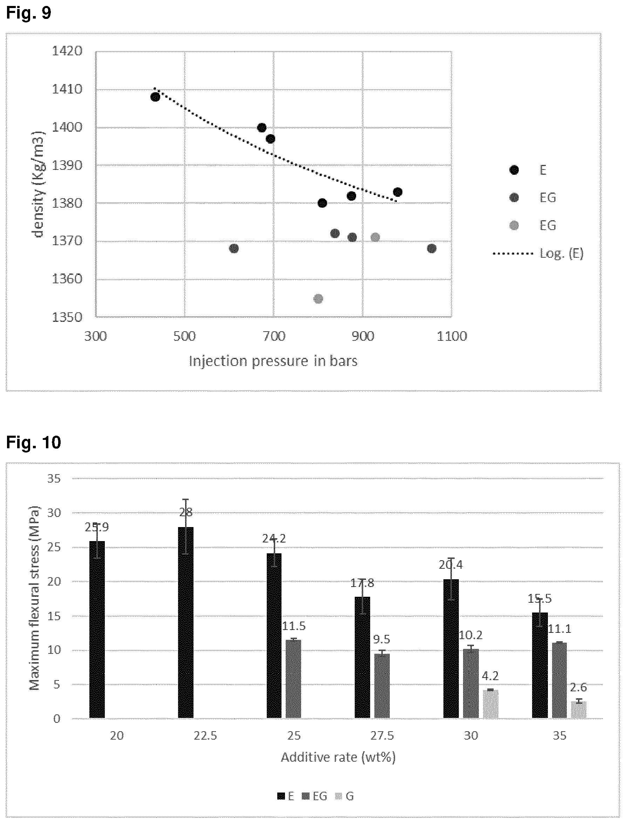

One can observe a slight increase of density from 1380 to 1410 when the water amount increases from 20 wt% to 35 wt%. Same trends are observed with other additives in a smaller magnitude linked to a narrower range of additive amount. Densities obtained with glycerol or glycerol + water were always lower. This observation could be linked to the difficulty to fill the mold that induces lower density, and the accumulated stress during the process which is released during conditioning and increases product dimension and thus decreases the density. The density evolution could be correlated to injection pressure as represented on Figure 9.

When water is used as an additive, one can observe a correlation between density and injection pressure. The lower is the injection pressure, the higher is the density and thus the higher is the additive amount. Glycerol and water blends seem to have a constant density whatever is the amount of additive used in the investigated range (from 25 wt% to 35 wt%). No conclusion can be drawn for glycerol as only two data points are available. If glycerol is in the product, it could help to release stress accumulated during molding and keep dimension constant.

In conclusion, the inventors were able to inject the formulations by using only 20 wt% of additive when water is used as additive. Higher is the amount of additive, lower will be the injection pressure, better will be the mold filling and higher will be the density. Water is the most efficient additive. Glycerol is the less efficient additive and need to be used in a higher quantity (30 wt% or 35 wt%). Blend of glycerol and water exhibits intermediate results in term of processability.

**Mechanical performances**

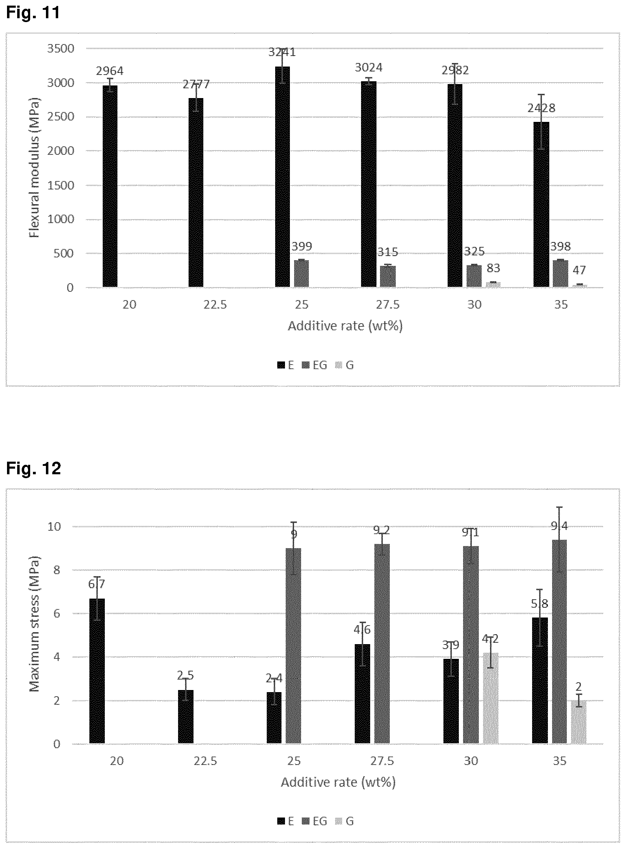

Flexural tests have been conducted on each tested condition and are presented in Figures 10 and 11.

One can observe a decrease of maximum flexural stress with an increase of additive amount for water. On the opposite flexural modulus seems to be constant with the amount of additive used for water and blend of water and glycerol. For glycerol, it is difficult to draw a conclusion on additive amount impact with only two points. Type of additive has a tremendous impact on flexural performance. When glycerol is used as an additive, one can observe a dramatic decrease of maximum flexural stress and flexural modulus. Same observation could be done with glycerol and water blend. This could be linked to the fact that after conditioning, water is released by the material and sample becomes more brittle (not plasticized). When glycerol is used, it remains within the sample and maintain plasticization effect and induces lower moduli and stress levels, which increases the softness (or elasticity) of the sample.

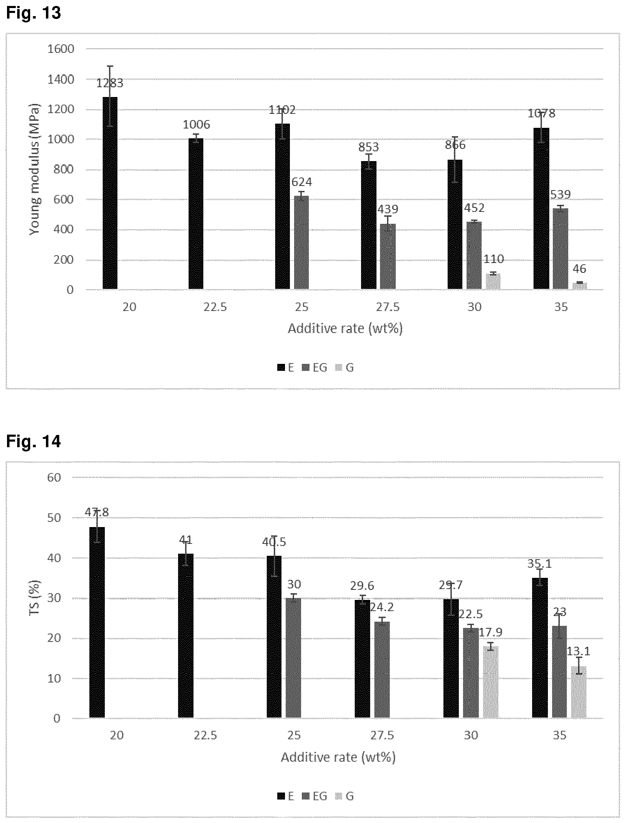

Tensile strength has be tested as well, and results are presented in Figures 12 and 13.

Young Modulus exhibits the same trends regarding impact of nature and amount of additive. Again, one can observe a tremendous effect of additive nature on Young modulus. Glycerol was the most effective additive after conditioning versus water (no desorption of glycerol during conditioning), due to its plasticization effect. Blend of additives (water + glycerol) shows intermediate values.

Maximum stress exhibits a different trend. Glycerol remains the most efficient additive at 35 wt% to soften product versus water, but this gap is less pronounced. The highest values were got with water and glycerol blend surprisingly.

In conclusion, water as an additive acts only during injection as it desorbs during conditioning and enables to get high level of mechanical performance. On the opposite glycerol enables to keep plasticization properties after sample conditioning and helps to soften the product. Blend of glycerol and water enable to adjust mechanical performances at the desired level and adapt formulation to product end-uses.

**Water resistance**

Water resistance was tested with a 24h immersion test time in room temperature water. Sample thickness was measured before and after immersion. The thickness swell, which is the ratio of thickness variation over initial thickness (see equation (1)), is reported in Figure 14.

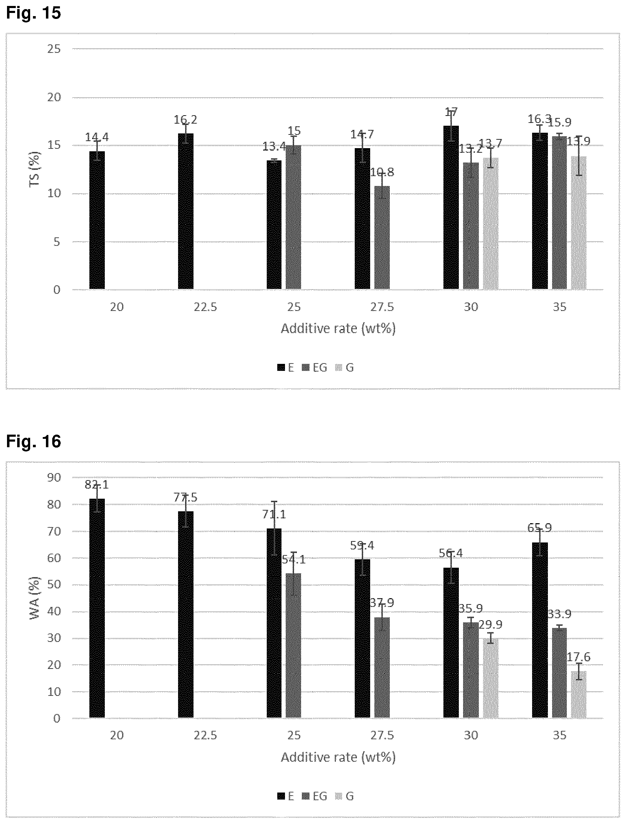

The water adsorption percentage is reported in Figure 16 and is calculated from the increase of sample mass before and after immersion divided by the initial sample mass (equation (2)):

$$WA = 100 \times \frac{m2 - m1}{m1} \qquad (2)$$

where m2 is the sample mass after immersion and m1 the sample mass before immersion.

Regarding experiments done with water as an additive, one can observe a decrease of thickness swelling with an increase of additive amount. This could be attributed to density increase and thus a decrease of water diffusion within the material during the immersion test. While water is replaced by glycerol, thickness swelling decrease even if density is almost constant or slightly lower. It means that the density is not the unique factor that could explain the positive impact of adding glycerol in the product (down to 13% at 35%). Blend of plasticizer (water and glycerol) exhibits intermediate results.

Immersion test was done also in hot water (80°C) for 5 minutes. Results are reported in Figure 15.

WA results exhibit the same trends. With glycerol, it was possible to achieve WA value down to 29.9% and 17.6% respectively to 30 wt% and 35 wt% of glycerol. Results are reported in Figure 16.

The hot water test is less discriminant than cold water because of a shorter immersion time. For this reason, thickness swelling is in a narrower range (all values are lower than 18%). The impact of additive amount in this case is not clearly observed. We can still observe better swelling performances when glycerol is used *versus* water (lower than 14%). There is a low value (10.8%) of thickness swelling for 27.5% of an additive blend of water and glycerol which is not expected.

**Conclusion**

The inventors were able to inject PF+MgO+additive blends. The type of additive needs to be chosen based on expected final mechanical performances. If only water is used (without glycerol) the end product will be too hard and too brittle. Consequently, the amount of water can be adapted in a wide range of ratio based on targeted mechanical properties. For soft product, glycerol needs to be used. Its amount needs to be adapted to the level of mechanical performances desired. Water could be added to glycerol to improve processability for intermediate softness product. This type of blend enables to tailor mechanical performance and use water to improve (if required) processability. Glycerol should be also the preferred additive once low thickness swelling in water is required.

**Claims**

1. A composition comprising at least or consisting of:

   • ground plant seeds, protein isolate, starch or a mixture thereof,
   • a metal oxide,
   • a plasticizer, and
   • optionally, water.

2. The composition of claim 1, **characterized in that** the plant seeds of the ground plant seeds are whole seeds.

3. The composition according to any one of claims 1 or 2, **characterized in that** said ground plant seeds contain at least 3% proteins by weight based on the weight of the ground plant seeds.

4. The composition according to any one of claims 1 to 3, **characterized in that** said ground plant seeds, protein isolate, starch or a mixture thereof are from a plant belonging to one or several of palm, safflower, sunflower, rape, canola, mustard, camelina, hemp, soybean, lupine, pea, flax, cotton, preferably ground whole pea seeds, sunflower seed meal, rapeseed (or canola seed) meal or soy meal, preferably ground whole pea seeds.

5. The composition according to any one of claims 1 to 4, **characterized in that** said metal oxide is chosen from MgO, ZnO, $TiO_2$, $Fe_2O_3$, $Al_2O_3$, or $SiO_2$, or a mixture thereof, preferably from ZnO, $SiO_2$ or MgO, or a mixture thereof, more preferably $SiO_2$ or MgO, or a mixture thereof, even more preferably from MgO.

6. The composition according to any one of claims 1 to 5, **characterized in that** said metal oxide represents from 1% to 50%, preferably from 3% to 40%, more preferably 3% to 20%, even more preferably 5% to 20%, most preferably from 5% to 10% by weight based on the weight of the ground plant seeds, protein isolate, starch or mixture thereof.

7. The composition according to any one of claims 1 to 6, **characterized in that** said plasticizer is at least one polyol or a mixture of polyols, more preferably glycerol.

8. A composition according to any one of claims 1 to 7, that is injectable, comprising or consisting of:

   • ground plant seeds chosen from ground whole pea seeds, sunflower seed meal, rapeseed (or canola seed) meal and/or soy meal, preferably whole pea seeds;
   • MgO as metal oxide, in a quantity of 3 to 10%, preferably 3 to 8% by weight based on the weight of the ground plant seeds;
   • glycerol as plasticizer, in a quantity of 5% to 40% by weight, preferably 10% to 35% by weight, based on the total weight of the injectable composition; and
   • optionally water.

9. A composition according to any one of claims 1 to 7, that is adhesive, **characterized in that** said plasticizer represents 20% to 60%, preferably 30% to 50%, more preferably 40% by weight based on the weight of the ground plant seeds, protein isolate, starch or mixture thereof.

10. A composition according to any one of claims 1 to 7 or 9, that is adhesive, comprising or consisting of:

    • ground plant seeds, wherein plant seeds are chosen from whole pea seeds, sunflower seeds meal, rapeseed (or canola seed) meal or soy meal;
    • a metal oxide chosen from ZnO, $SiO_2$ or MgO, or a mixture thereof, in a quantity of 10% by weight based on the weight of the ground plant seeds;
    • glycerol as plasticizer, in a quantity of 40% by weight based on the weight of the ground plant seeds; and
    • optionally, water.

11. A process for preparing a composition according to any one of claims 1 to 10, wherein in a first step, ground plant seeds, protein isolate, starch or a mixture thereof are mixed with at least one metal oxide, until complete mixing and, in a second step, at least one plasticizer is added, water being optionally added during the first or second step.

12. A lignocellulosic-based composite comprising a composition according to any one of claims 1 to 10, and a lignocellulosic material.

13. A lignocellulosic-based composite according to claim 12, at least comprising or consisting of:

    • lignocellulosic material, preferably wood, and
    • 10%-95%, preferably 10%-60% by weight of dry matter of the composition according to claims 1 to 7, 9 or 10, by weight of the lignocellulosic-based composite.

14. Use of a composition according to any one of claims 1 to 10, in the preparation of a lignocellulosic-based composite.

15. Process for preparing an article comprising the steps of:

(i) providing a composition according to any one of claims 1 to 8,
(ii) filling an extruder with the composition,
(iii) extruding the composition into a mold,

the composition being an injectable composition.

**Fig. 1**

**Fig. 2**

**Fig. 3**

A

MOR (MPa) — W/PF: 15, W/PF-MgO: 17, W/PF-SiO2: 26, W/PF-ZnO: 21

B

TS 2h (%) — W/PF: 26, W/PF-MgO: 21, W/PF-SiO2: 17, W/PF-ZnO: 21

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

Europäisches
Patentamt

European
Patent Office

Office européen
des brevets

## EUROPEAN SEARCH REPORT

**Application Number**

EP 20 30 5236

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 099 263 A (UNIV WUHAN TECH) 29 August 2017 (2017-08-29) * claims 1-6 * | 1-7,9, 11-13 | INV. C09J103/02 C08K3/22 C08K5/00 |
| X | US 2015/048554 A1 (KARRER BEAT [CH] ET AL) 19 February 2015 (2015-02-19) * paragraphs [0034], [0051]; claims 17-40 * | 1-7,9, 11-14 | |
| X | JIUGAO YU ET AL: "Preparation and characterization of glycerol plasticized-pea starch/ZnO-carboxymethylcellulose sodium nanocomposites", BIORESOURCE TECHNOLOGY, vol. 100, no. 11, 1 June 2009 (2009-06-01) , pages 2832-2841, XP055743742, AMSTERDAM, NL ISSN: 0960-8524, DOI: 10.1016/j.biortech.2008.12.045 * paragraph [2.3.] * | 1-7,9, 11-13 | |
| X | KOCHKINA NATALIYA E ET AL: "Structure and functional properties of glycerol-plasticized starch/TiO2nanocomposite materials obtained through resonant wave mixing", IRANIAN POLYMER JOURNAL, IRAN POLYMER AND PETROCHEMICAL INSTITUTE, IR, vol. 27, no. 11, 15 September 2018 (2018-09-15), pages 851-859, XP036615816, ISSN: 1026-1265, DOI: 10.1007/S13726-018-0659-9 [retrieved on 2018-09-15] * page 852, column 2, paragraph 4 - page 853, column 1, paragraph 1 * | 1-7,9, 11-13 | TECHNICAL FIELDS SEARCHED (IPC) C09J C08K |

The present search report has been drawn up for all claims

| Place of search | Date of completion of the search | Examiner |
|---|---|---|
| Munich | 27 October 2020 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 5236

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2020

| Patent document cited in search report | | Publication date | Patent family member(s) | | Publication date |
|---|---|---|---|---|---|
| CN 107099263 | A | 29-08-2017 | NONE | | |
| US 2015048554 | A1 | 19-02-2015 | CH | 706380 A1 | 15-10-2013 |
| | | | CN | 104364317 A | 18-02-2015 |
| | | | EP | 2836558 A1 | 18-02-2015 |
| | | | JP | 6214624 B2 | 18-10-2017 |
| | | | JP | 2015520776 A | 23-07-2015 |
| | | | KR | 20140145153 A | 22-12-2014 |
| | | | US | 2015048554 A1 | 19-02-2015 |
| | | | WO | 2013152448 A1 | 17-10-2013 |

EPO FORM P0459

For more details about this annex : see Official Journal of the European Patent Office, No. 12/82